# EUROPÄISCHE PATENTSCHRIFT

(11) **EP 0 628 610 B1**
(45) Veröffentlichungstag und Bekanntmachung des Hinweises auf die Patenterteilung: **11.08.1999**
(21) Anmeldenummer: 94108278.6
(22) Anmeldetag: 30.05.1994
(51) Int. Cl.: C09D 4/00, C08F 220/38, C08J 7/04

(54) **Kratzfeste antisoiling- und antigraffity-Beschichtung für Formkörper**
Scratch-resistant anti-soiling and anti-graffiti coating for mouldings
Revêtement résistant à l'abrasion antisalissant et anti-graffiti pour masses de moulage

(30) Priorität: 09.06.1993 DE 4319199
(43) Veröffentlichungstag der Anmeldung: 14.12.1994
(73) Patentinhaber: Röhm GmbH, 64293 Darmstadt (DE)
(72) Erfinder: Müller, Michael, Dr., D-64625 Bensheim (DE); Neeb, Rolf, D-64319 Pfungstadt (DE)

(56) Entgegenhaltungen:
- EP-A- 0 576 247
- GB-A- 1 262 526
- US-A- 5 128 387

## Beschreibung

### Gebiet der Erfindung

Die Erfindung betrifft Kratzfestlacke auf Basis mehrfunktioneller Acrylate und Methacrylate und ein Verfahren zum Überziehen von Formkörpern aus Kunststoff, wie organischen Gläsern, mit einer vornehmlich klaren Beschichtung in Form einer gehärteten dünnen Schicht, die durch Polymerisation von im wesentlichen polyfunktionellen Acryl- und/oder Methacrylverbindungen entsteht, die sich durch hohe Kratzfestigkeit, auch unter Bedingungen der Freibewitterung, mit öl- und wasserabweisender Wirkung auszeichnet.

### Stand der Technik

Nach der DE-A 21 64 716 und der DE-A 24 55 715 kann die Polymerisation mehrfunktioneller Acrylat-Systeme mit thermisch zerfallenden Polymerisationsinitiatoren, den üblichen öllöslichen Peroxiden und Azoverbindungen, oder durch Bestrahlung, z.B. durch Einwirkung von UV-Strahlung in Gegenwart von Photoinitiatoren, durchgeführt werden.

Bevorzugt wendet man die UV-Initiierung an, da diese auch in Anwesenheit von Luftsauerstoff durchführbar ist. Nach der DE-A 29 28 512 ergibt die Durchführung einer solchen UV-Polymerisation bei Temperaturen zwischen 70 Grad C und der Glastemperatur des zu beschichteten Kunststoffes kratzfeste Überzüge mit verbesserter Haftung.

Auch die peroxidische Initiierung zur Herstellung von beschichteten, kratzfesten Platten mit guter Witterungsbeständigkeit ist bekannt. Nach der EP-B 0 245 728 wird die Beschichtung mit aliphatischen Peroxydicarbonaten als peroxidischen Initiatoren durchgeführt.
UV-härtbare, kratzfeste Beschichtungen bildende Acrylharze mit Zusätzen von Fluoralkylgruppen-haltigen (Meth)acrylat-Comonomeren sind bekannt aus JP 63,196 667 (Ref.: CA 110,97285), enthaltend neben polyfunktionellen Acrylaten 10 bis 60 % (Meth)acrylsäureester der Formel H₂C = C(R)CO₂CH₂R_{f} mit R=H,Me und R_{f}=C₁₋₂₀-Fluoralkyl, zur PC-Beschichtung, aus JP 60,151 601 (Ref.: C.A. 104,69 939), beschreibend eine BuCOMe-Lösung mit polyfunktionellen Acrylaten und Dihydroperfluorhexylacrylat im Gew.-Verhältnis 55 : 45, für die Beschichtung von Plastik-Linsen aus Polydiallylverbindungen, und aus JP 77,105 936 (Ref.: C.A. 88,52 095) beschreibend ein Lackharz aus polyfunktionellen Acrylestern, Methylmethacrylat und, bezogen auf die Monomeren, 1 Gew.-% Hexafluorpropylmethacrylat, zur Beschichtung von Polymethacrylat-Linsen. Durch das Fluorcomonomere erhält die harte Beschichtung der Polymethacrylat-Linse bessere optische Eigenschaften und eine bessere Oberflächenglätte.
Aus der EP-A 40 923 sind strahlungshärtbare, dabei klebrige Schichten bildende Stoffgemische aus polyethylenisch ungesättigten und vernetzenden Substanzen, einem filmbildenden Polymeren und einem polyfluorierten Acrylat, wobei die Fluorverbindung insbesondere eine solche der Formel H₂C=C(R)-CO₂-(CH₂)₁₋₁₂-R_{f} (A) oder der Formel 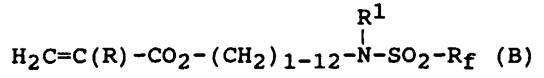 mit R=H, Me; R¹ =H, C₁-C₄-Alkyl; R_{f}= polyfluoriertes C₆₋₂₀-Alkyl, wie z.B. N-Ethylheptadecafluoroctansulfonamidoethylacrylat ist, zur Beschichtung von Polymeren bekannt.
Beschichtungsmassen für PMMA-Platten aus Diacrylat, Epoxyacrylat und Fluoralkylgruppen-haltigen Methacrylaten, wie sie in dem vorstehenden, die EP-A 40 923 referierenden Abschnitt mit den Formeln A und B wiedergegeben sind, werden in JP 61,258 870 (Ref.: C.A. 107,135 968 angegeben. Mit diesen Kompositionen lassen sich keine harten und kratzfesten Beschichtungen erzeugen.

Kunststoff-Formkörper, auch kratzfestbeschichtete, werden vor allem in Form von Platten im Bau-Außenbereich, wie z.B. bei Lärmschutzwänden oder als Verglasungen von Fassaden, von Bushaltestellen, von Werbeflächen, Litfaßsäulen, sogenannten "mobilier urbain" eingesetzt, wo sie sowohl natürlicher Verschmutzung als auch einer Verschmutzung man-made durch Vandalismus, wie z.B. der Graffity-Beschmierung, ausgesetzt sind. Die Reinigung solcher Flächen ist sehr aufwendig, oft ohne zerstörenden Eingriff, zumindest in der Oberfläche, kaum zu bewerkstelligen.

### Aufgabe und Lösung

Es bestand die Aufgabe, Lacke für eine chemikalien- und lösemittelresistente Beschichtung von Formkörpern zu entwickeln, an deren Oberfläche die Haftung von nachträglich aufgebrachten Partikeln wie Schmutz oder von Lacken mit Farbpartikeln, z.B. aus Sprühdosen deutlich reduziert ist.

Überraschenderweise wurde gefunden, daß aus mehrfunktionellen Acrylat- bzw. Methacrylat-Monomeren bzw. Monomermischungen, denen oberflächenaktive Comonomere zugesetzt sind, durch Polymerisation in Gegenwart von Azoverbindungen oder Peroxiden als Initiatoren oder vor allem durch UV-Strahlung in Gegenwart von Photoinitiatoren angeregt, hochkratzfeste und sehr witterungsbeständige Beschichtungen mit wesentlich verbesserten Reinigungsmöglichkeiten auf Kunststofformkörpern erhalten werden. Die polymerisierbare mehrfunktionelle Monomerenmischung enthält als oberflächenaktive Comonomere erfindungsgemäß 0,1 bis 20 Gew. -%, vor allem 0,1 bis 10 Gew.-% und insbesondere 0,5 bis 5 Gew-% an Fluoralkylgruppen-haltigen (Meth)acrylmonomeren der Formel 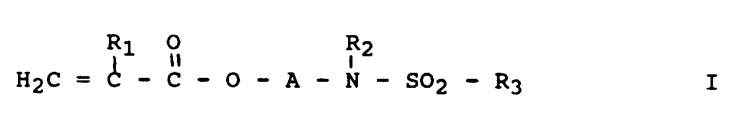 mit R₁ = H,CH₃; A = C₂- bis C₆-Alkylen; R₂ = H, C₁- bis C₄-Alkyl; R₃ = CₐH_{b}F_{c}
mit a = 2 bis 30, b = 0 bis 4, c = 2a + 1-b;
durch welche die damit erhaltene Formkörperbeschichtung eine niedrige Oberflächenenergie aufweist, was die Haftung von Lacken und Schmutz erheblich vermindert.

Weiter wurde gefunden, daß im erfindungsgemäßen Beschichtungsmittel enthaltene Fluoralkylgruppen-haltige (Meth)acrylmonomere der Formel 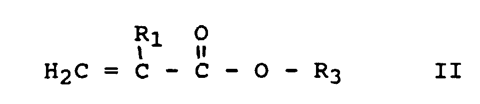 mit R₁ = H, CH₃ und R₃ = CₐH_{b}F_{c}
mit a = 2 bis 20, b = 0 bis 4, c = 2a + 1-b;
in Mengen von 0,5 bis 40 Gew.-%, insbesondere in Mengen von 1 bis 20 Gew.-% bezogen auf das Gesamtgewicht der im Beschichtungsmittel enthaltenen polymerisierbaren Komponenten, in diesem bei der Auftragung des Beschichtungslacks als hervoragende Verlaufmittel fungieren. Nach der Härtung des erfindungsgemäßen Beschichtungsmittels durch Polymerisation sind die als Verlaufmittel wirkenden Substanzen, im Gegensatz zu üblich verwendeten nicht polymerisierbaren Verlaufmitteln, fest eingebunden und nicht migrationsfähig.

### Die Erfindung betrifft

Verwendung von Beschichtungsmitteln, bestehend aus radikalisch polymerisierbaren, vernetzenden Monomeren und/oder reaktiven Oligomeren mit wenigstens zwei polymerisierbaren Kohlenstoff-Doppelbindungen im Gemisch mit weiteren, eine polymerisierbare Doppelbindung enthaltenden Monomeren und üblichen Additiven oberflächen-aktiven Fluoralkylgruppen-haltigen (Meth)acrylmonomeren mit niedriger Oberflächenenergie der Formel 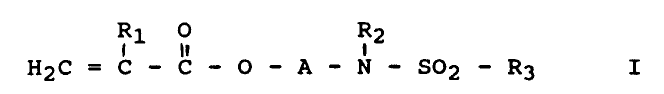 mit R₁ = H, CH₃; A = C₂- bis C₆-Alkylen; R₂ = H, C₁- bis C₄-Alkyl; R₃ = CₐH_{b}F_{c}
mit a = 2 bis 20, b = 0 bis 4, c = 2a + 1-b
in Mengen von 0,1 bis 20 Gew.-% bezogen auf das Gesamtgewicht der im Beschichtungsmittel vorhandenen polymerisierbaren Komponenten zur Herstellung einer Kratzfesten und witterungsbeständigen und schmutzabweisenden Beschichtung auf einem Formkörper aus Kunststoff.
Erfindungsgemäß vorteilhaft sind Beschichtungsmittel, die Kombinationen von Fluoralkylgruppen-haltigen (Meth)acrylmonomeren der Formeln 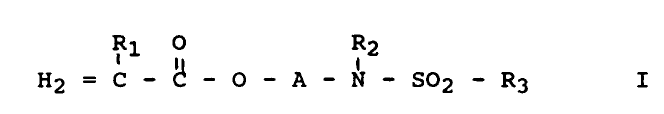 und 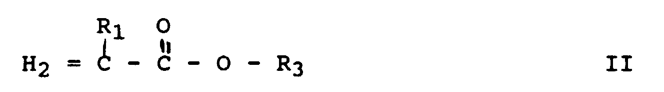 mit R₁ = H, CH₃; A = C₂- bis C₆-Alkylen; R₂ = H, C₁- bis C₄-Alkyl; R₃ = CₐH_{b}F_{c}
mit a = 2 bis 20, b = 0 bis 4, c = 2a + 1-b;
enthalten.

Die neuen Beschichtungen haben neben ihren bekannten Kratzfestigkeiten und Witterungsbeständigkeiten zusätzliche weitere Eigenschaften, nämlich antisoiling- und antigraffity-Eigenschaften, die einmal die Selbstreinigungseigenschaften von Formkörpern erhöhen und die bessere Entferung von Sprühlacken an solchen Teilen ermöglichen. Diese Eigenschaften sind beispielsweise für das Sauberhalten von Lärmschutzwänden, von Werbeflächenverglasungen und Litfaßsäulen vorteilhaft.

Bewitterungsversuche im Xenotest zeigen, daß die erfindungsgemäßen Beschichtungen auf z.B. extrudiertem Acrylglas, gute Bewitterungsergebnisse erbringen.

Weiter wurde gefunden, daß die Witterungsbeständigkeit der erfindungsgemäßen, mit polyfunktionellen (Meth)acrylaten hergestellten, antisoiling- bzw. antigraffity-Beschichtung aufweisenden Kunststoff-Formkörper durch Mitverwendung von UV-Schutzmitteln und Alterungsschutzmitteln, insbesondere von einpolymerisierten UV-Schutzmitteln, noch wesentlich verbessert werden kann.
Die erfindungsgemäßen Beschichtungsmittel und die daraus hergestellten Beschichtungen bzw. Überzüge sind wesentlich aus wenigstens 30 Gew.-% einer polyfunktionellen (Meth)acrylverbindung, aus weniger als 30 Gew.-% einer weiteren einpolymerisierbaren Verbindung und 0,1 bis 20 Gew.-% eines Fluoralkylgruppen-haltigen (Meth)acrylmonomeren der Formel I aufgebaut.

### Vorteile der Erfindung

Vergleiche der Kratzfestigkeit der erfindungsgemäßen, bessere Eigenschaften zur Reinhaltung aufweisenden Überzüge mit bekannten kratzfesten Überzügen auf Polyacrylat- oder Polysiloxanbasis auf Kunststoff-Flächen zeigen, daß die neuen Überzüge gute Kratzfestigkeiten aufweisen. Die Herstellung der Polyacrylat-Beschichtung ist wesentlich rationeller, da diese innerhalb von Sekunden bis Minuten durchhärtet, während die Polysiloxan-Beschichtung bei vergleichbaren Härtungstemperaturen mehrere Stunden Härtungszeit beansprucht.

Ein besonderer Vorzug der erfindungsgemäßen Beschichtung besteht darin, daß die neue Kratzfestschicht mit antisoiling- und antigraffity-Eigenschaften auf nahezu jedem Untergrund haftet. So können mit dieser Beschichtung sogar die sonst so trägen Kunststoffe wie Polyethylen und Polypropylen nach aktivierender Vorbehandlung beschichtet werden.

### Durchführung der Erfindung

Eine kratzfeste Beschichtung ist auf Formkörpern allgemein, insbesondere aber auf solchen Kunststoff-Formkörpern zweckmäßig, die eine harte, glänzende Oberfläche haben, aber kratzempfindlich sind. Zu den Kunststoffen, die eine geringe Oberflächenhärte aufweisen, gehören solche, die wenig oder schwach vernetzt sind und sich im thermoplastischen oder thermoelastischen Zustand zur Formkörpern verarbeiten lassen. Hierzu gehören beispielsweise Polymethylmethacrylat, Mischpolymerisate aus Methylmethacrylat mit weiteren Methacryl- und/oder Acrylverbindungen, wie z.B. Acrylnitril, beispielsweise mit 60 Gew.-% Methylmethacrylat, Polystyrol, schlagzähe Styrol-Mischpolymerisate, Polyethylen, Polypropylen, Polyvinylchlorid, Cellulose oder Polycarbonat auf Bisphenol-A-Basis.

Zur Verringerung der natürlichen und künstlichen Verschmutzung werden die Formkörper mit Beschichtungen überzogen, die neben den bekannten Kratzfesteigenschaften reduzierte Haftung für Schmutz und Lacke zeigen.

Die erfindungsgemäße Beschichtung der Kunststoffe wird an dem Formkörper in seiner endgültigen Gestalt, beispielsweise an einem fertigen Spritzgußteil, vorgenommen, da die hochvernetzte kratzfeste Schicht nicht thermoplastisch oder thermoelastisch verformbar ist. In begrenztem Umfang läßt die Beschichtung eine elastische Biegung des Kunststoff-Formkörpers zu. Ein bevorzugter Gegenstand der Erfindung ist die Beschichtung von ebenen Platten oder kontinuierlich erzeugten ebenen Bändern, Hohlprofilplatten oder Folien, wobei die Beschichtung direkt an den Extrusionsvorgang, bevorzugt in kontinuierlicher Vorgehensweise, angeschlossen werden kann.
Aber auch die Beschichtung von in großen Serien hergestellten Spritzgußteilen ist bevorzugt.

Beschichtungsmittel, die erfindungsgemäß zu hochvernetzten, kratzfesten und witterungsbeständigen Beschichtungen aushärten, enthalten als wesentliche Bestandteile bis 60 Gew.-% eines oder mehrerer Fluoralkylgruppen-haltigen (Meth)acrylmonomeren der Formel I oder der Formeln I und II und ein oder mehrere radikalisch polymerisierbare Acryl- und/oder Methacrylverbindungen mit wenigstens zwei, vorzugsweise drei oder mehr polymerisierbaren Kohlenstoffdoppelbindungen. Die bevorzugten drei- oder höherfunktionellen Monomeren sind Acrylester von drei- oder höherwertigen Alkoholen, wie Glycerin, Trimethylolpropan, 1,2,4-Butantriol, 1,2,6-Hexantriol, Pentaerythrit, Diglycerin oder Dipentaerythrit. Bevorzugte polyfunktionelle Monomere sind Trimethylolpropantriacrylat bzw. Pentaerythrit-triacrylat und/oder -tetraacrylat, 1,2,6-Hexantrioltriacrylat. Der Anteil der Methacrylgruppen am Acryl- plus Methacrylmonomeren-Anteil soll möglichst niedrig gehalten werden. Bevorzugt ist ein Anteil von höchstens 30 Gew.-% Methacrylmonomere. Weiterhin bevorzugt ist, daß als Monomere mit wenigstens zwei Kohlenstoff-Doppelbindungen zu wenigstens 70 Gew.-% Monomere mit Acrylat-Einheiten eingesetzt werden. Als polymerisierbare (Meth)acrylverbindungen können im Beschichtungsmittel auch reaktive, vorteilhaft polyfunktionelle Oligomere, wie beispielsweise Urethandi- bzw. -triacrylate oder entsprechende Esteracrylate mitverwendet werden.

Neben den als wesentlich angegebenen Monomeren, bringt die Mitverwendung von Monomeren, die eine oder zwei radikalisch polymerisierbare Doppelbindungen enthalten, Vorteile bei der Handhabung der im allgemeinen hochviskosen drei- und mehrfunktionellen Monomeren bzw. Oligomeren und in den Eigenschaften der Beschichtung, z.B. einer verbesserten Flexibilität. Beispiele für brauchbare Monomere mit einer polymerisierbaren Doppelbindung sind Styrol, Acrylnitril, Acrylate bzw. Methacrylate mit 1 bis 10 C-Atomen im Esterrest und die im Esterrest noch, z.B. mit OH-Gruppen, substituiert sein können.
Besonders bevorzugt sind jedoch Monomere mit einem Siedepunkt > 140 Grad C und einer Acrylgruppe als polymerisierbare Einheit.

Beispiele für geeignete difunktionelle Comonomere sind 1,4-Divinylbenzol oder die Diacrylate und Dimethacrylate von Ethylenglykol, Diethylenglykol, Tetraethylenglykol, Propylenglykol-1,2 Butandiol-1,4 oder -1,3, Dimethylpropandiol, Hexandiol-1,6, Neopentylglykol, 2-Ethyl-hexandiol-2,3, wobei wiederum der Anteil an Methacrylaten niedrig zu halten ist.

Die wesentlich die neuen Antiverschmutzungseigenschaften in die Poly-(Meth)acrylat-Kratzfestbeschichtung einbringenden Monomeren sind Acryl- und Methacrylmonomere, insbesondere Acryl- und Methacrylester, die fluorhaltige Alkylgruppen, insbesondere als Esterrest, am Acryl- und/oder Methacrylrest enthalten. Sie werden durch die Formel I beschrieben. Beispielhaft seien dazu insbesondere genannt:
2-N-Ethyl-nonafluorbutansulfonamidoethylacrylat: C₁₁H₁₂F₉NO₄S
4-N-Methyl-nonafluorbutansulfonamidobutylacrylat: C₁₂H₁₄F₉NO₄S
2-N-Ethyl-tridecafluorhexansulfonamidoethylacrylat: C₁₃H₁₂F₁₃NO₄S
2-N-Ethyl-pentadecafluorheptansulfonamidoethylacrylat: C₁₄H₁₂F₁₅NO₄S
2-N-Methyl-heptadecafluoroctansulfonamidoethylacrylat: C₁₄H₁₀F₁₇NO₄S
2-N-Methyl-heptadecafluoroctansulfonamidoethylmethacrylat: C₁₅H₁₂F₁₇NO₄S
2-N-Methyl-tridecafluoroctansulfonamidoethylacrylat: C₁₄H₁₄F₁₃NO₄S
2-N-Ethyl-heptadecafluoroctansulfonamidoethylacrylat: C₁₅H₁₂F₁₇NO₄S
2-N-Ethyl-heptadecafluoroctansulfonamidoethylmethacrylat: C₁₆H₁₄F₁₇NO₄S
2-N-Propyl-heptadecafluoroctansulfonamidoethylmethacrylat: C₁₇H₁₆F₁₇NO₄S
2-N-Butyl-heptadecafluoroctansulfonamidoethylacrylat: C₁₇H₁₆F₁₇NO₄S
4-N-Methyl-heptadecafluoroctansulfonamidobutylacrylat: C₁₆H₁₄F₁₇NO₄S
2-N-Methyl-pentacosafluortridecylsulfonamidoethylacrylat: C₁₉H₁₂F₂₅NO₄S

Beispiele für weitere erfindungsgemäß zu verwendende Fluoralkylgruppen-haltige Acryl- und Methacrylmonomere sind Verbindungen der Formel II, die insbesondere zum guten Verlauf des Beschichtungsmittels beim Auftragen beitragen, und die vorteilhaft in Kombination mit den oben genannten Fluor-haltigen Monomeren I verwendet werden: 2,2,2-Trifluorethylmethacrylat, 2,2,3,3-Tetrafluorpropylacrylat, 2,2,3,3-Tetrafluorpropylmethacrylat, 2,2,3,4,4,4-Hexafluorbutylacrylat, 2,2,3,4,4,4-Hexafluorbutylmethacrylat, Nonadecafluorisodecylmethacrylat, 2,2,3,3,4,4,4-Heptafluorbutylacrylat, 2,2,3,3,4,4,5,5,6,6,7,7,7-Tridecafluorheptylacrylat.

Die beschriebenen Fluoralkylgruppen-haltigen Monomere sind bekannte Verbindungen. Sie lassen sich verallgemeinernd durch die chemische Formel 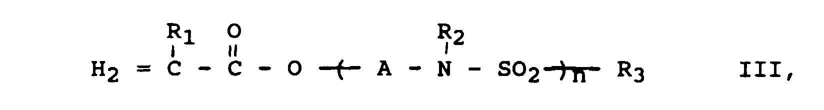 worin
- R₁ =: H, CH₃
- A =: C₂- bis C₆-Alkylen
- R₂ =: C₁- bis C₄-Alkylrest
- R₃ =: CₐH_{b}F_{c}
mit
a = 2 bis 20
b = 0 bis 4
c = 2a + 1-b und
- n =: 0 oder 1
bedeuten,
wiedergeben.

Beispiele für Fluorarylgruppen-haltige (Meth)acrylmonomere, die in dem erfindungsgemäßen Beschichtungsmittel, vor allem in Kombination mit Fluorverbindungen der Formel I, gegebenenfalls mitverwendet werden können, sind 2,3,5,6-Tetrafluorphenylacrylat und 2,3,5,6-Tetrafluorphenylmethacrylat.

Die fluorhaltigen Acryl- und/oder Methacrylmonomere, die den Beschichtungsmitteln mit mehrfunktionellen (Meth)acrylaten erfindungsgemäß gute Verlaufeigenschaften und den daraus hergestellten kratzfesten Beschichtungen auf Poly(meth)acrylat-Basis erfindungsgemäß antisoiling- und antigraffity-Eigenschaften geben, sind in Mengen von 0,1 bis 60 Gew.-%, vorzugsweise in Mengen von 0,1 bis 40 Gew.-%, vorteilhaft in Mengen von 0,5 bis 20 Gew.-%, insbesondere in Mengen von 0,5 bis 10 Gew.-%, vor allem in Mengen von 0,5 bis 5 Gew.-% bezogen auf alle polymerisierbaren Verbindungen, im Beschichtungsmittel enthalten.

Die Fluoralkylgruppen-haltigen (Meth)acrylatmonomere der Formel II, die den Beschichtungsmitteln erfindungsgemäß gute Verlaufseigenschaften geben, sind in Mengen von 0,1 bis 40 Gew.-%, vorzugsweise von 0,5 bis 20 Gew.-% und besonders bevorzugt von 5 bis 15 Gew.-%, bezogen auf alle polymerisierbaren Verbindungen, enthalten.

Eine verbesserte Witterungsbeständigkeit der erfindungsgemäßen Beschichtung wird durch eingearbeitete UV-Schutzmittel, wie sie als Zusätze zu Kunststoffen bekannt sind und in Ullmanns Encyklopädie der technischen Chemie, 4. Auflage, Band 15, Seiten 253 bis 260, aufgeführt sind und/oder vorteilhafterweise durch polymerisierbare UV-Stabilisatoren erreicht. Als Beispiel für polymerisierbare UV-Stabilisatoren sei 3-(2-Benzotriazolyl)-2-hydroxy-5-tert.-octylbenzylmethacrylamid genannt.

Das Mischungsverhältnis der verschiedenen Monomerarten beeinflußt einerseits die Viskosität der Beschichtungsmischung, andererseits die Eigenschaften der ausgehärteten Schicht. Die drei- und mehrfunktionellen Monomeren bringen die höchste Kratzfestigkeit, aber auch eine starke Sprödigkeit hervor. Vorzugsweise beträgt ihr Anteil 30 Gew.-% oder mehr. Der Anteil bifunktioneller Monomerer, die ebenfalls zur Verbesserung der Kratzfestigkeit der damit beschichteten Kunststoffe beitragen mit dem Anteil der monofunktionellen, auch der fluorhaltigen Comonomeren, wird zusammen im allgemeinen nicht über 70 Gew.-% liegen. UV-Schutzmittel werden in Mengen von 1 bis 10 Gew.-%, bezogen auf die Mengen der die Beschichtung bildenden Monomeren eingesetzt.

Die Härtung des Beschichtungsmittels kann mit thermisch zerfallenden Initiatoren wie Peroxiden oder Azoverbindungen durchgeführt werden. Vorteilhaft wird sie jedoch mit UV-Licht in Gegenwart bekannter Photoinitiatoren ausgeführt. Die Härtunstemperaturen liegen etwa im Temperaturbereich von 0 bis 50 Grad C, insbesondere um 20 Grad C (Raumtemperaturhärtung). Zur besseren Anlösung des Haftuntergrundes können dem Beschichtungsmittel auch organische Lösungsmittel, z.B. Methylethylketon, zugesetzt sein.
Weitere Zusätze können Antioxidantien, sonstige übliche Additive oder Polymere, wie z.B. Polyesterharze, sein.

Das Beschichtungsmittel kann mittels verschiedener Techniken, wie Tauchen, Gießen, Sprühen oder Walzenauftrag, diskontinuierlich oder kontinuierlich auf die Kunststofformkörper, in Schichtdicken von 1 bis 100, vorzugsweise von 2 bis 50 µm, aufgebracht werden. Beispielsweise bietet sich nach der kontinuierlichen Herstellung von Kunststoffplatten durch Extrusion die Durchführung einer kontinuierlichen Beschichtung dieser, sich gegebenenfalls noch auf höheren Temperaturen befindlichen Platten, wobei diese Temperaturen aber unterhalb der Glastemperatur der Kunststoffplatten liegen, an. Die Aushärtung der Beschichtungsmittel wird normalerweise bei Temperaturen, die unterhalb der Glastemperatur des zu beschichtenden Kunststoffes liegt, durchgeführt. Zum Ausschluß des polymerisationsinhibierenden Sauerstoffs kann die Polymerisation unter Inertgas, z.B. Stickstoff, durchgeführt werden. Die Aushärtungszeit liegt im Sekunden- bis Minutenbereich, z.B. bei 5 bis 1 000 Sekunden, und hängt wesentlich von der Temperatur im Beschichtungsmittel, die u.a. von der Temperatur des zu beschichtenden Substrates mitbestimmt wird, ab.

### BEISPIELE

### Beispiel 1

Eine Basismischung, bestehend aus 39 Gew.-Einheiten Pentaerythrit-tetraacrylat, 59 Gew.-Teilen Hexandioldiacrylat und 2 Gew.-Teilen Darocur® 1116 wird mit den in Tabelle 1 genannten Anteilen an 2-(N-ethylperfluorooctansulfamido)-ethylacrylat (A) bzw. 2-(N-Ethylperfluorooctansulfamido)-methacrylat (B) versetzt und mit einem Sprialrakel (12 um Naßfilmdicke) auf Platten aus Makrolon® 281 aufgetragen. Nach jeweils 1 Minute Verlaufszeit wird mit einem Quecksilber-Hochdruckstrahler F450 der Fa. Fusion Systems bei 1m/min Vorschubgeschwindigkeit unter Stickstoffatmosphäre ausgehärtet. Die Beurteilung der Antigraffiti-Wirkung erfolg durch Besprühen mit handelsüblichen Acryl-Autolacken und wird wie folgt beurteilt:

Schlechte Antigraffiti-Wirkung:
Lack benetzt Oberfläche vollständig, gute Lackhaftung, nur mit Lösemittel entfernbar.

Sehr gute Antigraffiti-Wirkung:
Lack zieht sich sofort zu einzelnen Tropfen zusammen, keine Filmbildung, getrockneter Lack ist trotzdem abwischbar.

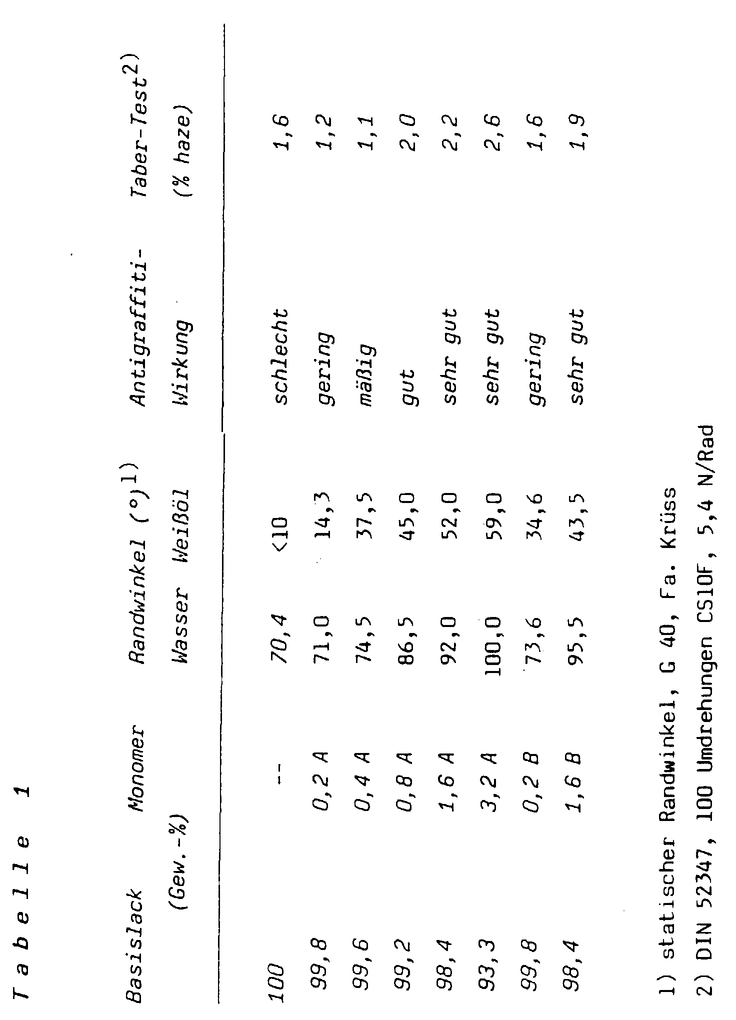

### Beispiel 2

Eine weitere Basismischung aus 38 Teilen Pentaerythrittetraacrylat, 58 Teilen Hexandioldiacrylat, 2 Teilen 2-(N-Ethylperfluorooctansulfamido)-ethylacrylat und 2 Teilen Darocur ® 1116 wird ohne bzw. mit den in Tab. 2 angegebenen Comonomeren wie in Beispiel 1 beschrieben beschichtet und jeweils nach exakt 1 min Verlaufszeit ausgehärtet. Anschließend wird das Verlaufen der beschichtungsbedingten Oberflächenstörungen visuell begutachtet:

| Basis-Lack | Monomer | (Gew.-%) | Optik | Taber-Test¹⁾ (% haze) |
|---|---|---|---|---|
| 100 | -- | -- | rillig | 1,6 |
| 90 | A | 10 | gut | 1,8 |
| 80 | A | 20 | sehr gut | 1,6 |
| 90 | B | 10 | gut | 2,0 |
| 80 | B | 20 | sehr gut | 2,2 |
| Monomer A: 2,2,2-Trifluorethylmethacrylat B: 2,2,3,3-Tetrafluorpropylmethacrylat | | | | |

| | | | | |
|---|---|---|---|---|
| 1) DIN 52347, 100 Umdrehungen CS10F, 5,4 N/Rad | | | | |

### Beispiel 3

Basislack aus Beispiel 1 mit 2 Gew.-% 2-(N-Ethylperfluorooctansulfonamido)-acrylat wird im Revers-Walzenauftragsverfahren auf Makrolon® 281 aufgetragen und mit einem Hg-Hochdruckstrahler der Fa. Meyer-Miseré (100 W/cm) unter N₂ gehärtet. Die optisch fehlerfreie Beschichtung besitzt gute Kratzfestigkeit im Stahlwolletest und zeigt auch nach mehreren Monaten Freibewitterung noch sehr gute Antigraffiti-Wirkung (vgl. Beispiel 1).

## Patentansprüche

1. Verwendung von Beschichtungsmitteln, bestehend aus radikalisch polymerisierbaren, vernetzenden Monomeren und/oder Oligomeren mit wenigstens zwei polymerisierbaren Kohlenstoff-Doppelbindungen im Gemisch mit weiteren, eine polymerisierbare Doppelbindung enthaltenden Monomeren und üblichen Additiven und oberflächenaktiven Fluoralkylgruppen-haltigen(Meth)acrylmonomeren der Formel 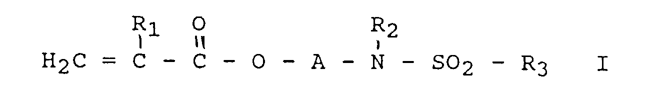 mit R₁ = H, CH₃; A = C₂- bis C₆-Alkylen; R₂ = H, C₁- bis C₄-Alkyl; R₃ = CₐH_{b}F_{c}, mit a = 2 bis 20, b = 0 bis 4, c = 2a + 1-b
in Mengen von 0,1 bis 20 Gew.-%, bezogen auf das Gesamtgewicht der im Beschichtungsmittel vorhandenen polymerisierbaren Komponenten, zur Herstellung einer kratzfesten und witterungsbeständigen und schmutzabweisenden Beschichtung auf einem Formkörper aus Kunststoff.

2. Verwendung von Beschichtungsmitteln nach Anspruch 1, wobei diese bezogen auf die zu polymerisierenden Monomeren und/oder Oligomeren wenigstens 30 Gew.-% eines Monomeren bzw. Oligomeren mit mindestens drei Kohlenstoff-Doppelbindungen und 0,1 bis 10 Gew.-% eines Fluoralkylgruppen-haltigen (Meth)acrylmonomeren der Formel I enthalten.

3. Verwendung von Beschichtungsmitteln nach den Ansprüchen 1 und 2, wobei als Monomere mit wenigstens zwei Kohlenstoff-Doppelbindungen zu wenigstens 70 Gew.-% Monomere mit Acrylat-Einheiten eingesetzt werden.

4. Verwendung von Beschichtungsmitteln nach den Ansprüchen 1 bis 3, wobei diese als Fluoralkylgruppen-haltige (Meth)acrylmonomere Kombinationen von Monomeren der Formeln 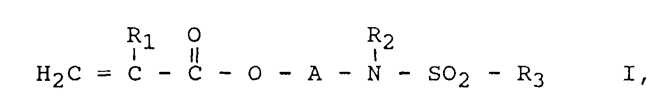 und 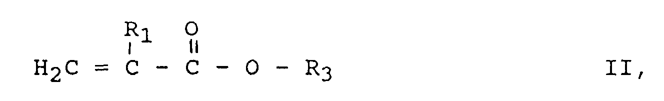 worin R₁ = H, CH₃; A = C₂- bis C₆-Alkylen; R₂ = C₁- bis C₄-Alkylrest; R₃ = CₐH_{b}F_{C}
mit a = 2 bis 20; b = 0 bis 4; c = 2a + 1-b;
bedeuten,
enthalten.

5. Verwendung von Beschichtungsmitteln nach den Ansprüchen 1 bis 4, zur Herstellung einer kratzfesten, witterungsbeständigen Beschichtung auf Kunststoff-Formkörpern mit antisoiling- und antigraffity-Eigenschaften, wobei diese Fluoralkylgruppen-haltige (Meth)acrylmonomere der Formel I in Mengen von 0,1 bis 20 Gew.-%, bezogen auf alle polymerisierbaren Verbindungen im Beschichtungsmittel, enthalten.

6. Verwendung von Beschichtungsmitteln nach den Ansprüchen 1 bis 4, zur Herstellung einer kratzfesten, witterungsbeständigen Beschichtung auf Kunststoff-Formkörpern mit antisoiling- und antigraffity-Eigenschaften, wobei diese Fluoralkyl-gruppen-haltige (Meth)acrylmonomere der Formel I in Mengen von 0,5 bis 5 Gew.-%, bezogen auf alle polymerisierbaren Verbindungen im Beschichtungsmittel, enthalten.

7. Verwendung von Beschichtungsmitteln nach den Ansprüchen 1 bis 6 zur Herstellung einer kratzfesten, witterungsbeständigen und schmutzabweisenden Beschichtung auf Kunststoff-Formkörpern, wobei diese als Verlaufmittel Fluoralkylgruppen-haltige (Meth)acrylmonomere der Formel II in Mengen von 0,1 bis 40 Gew.-%, bezogen auf alle polymerisierbaren Verbindungen im Beschichtungsmittel, enthalten.

8. Verwendung von Beschichtungsmitteln nach den Ansprüchen 1 bis 6 zur Herstellung einer kratzfesten, witterungsbeständigen und schmutzabweisenden Beschichtung auf Kunststoff-Formkörpern, wobei diese als Verlaufmittel Fluoralkylgruppen-haltige (Meth)acrylmonomere der Formel II in Mengen von 0,5 bis 20 Gew.-%, bezogen auf alle polymerisierbaren Verbindungen im Beschichtungsmittel, enthalten.

9. Verwendung von Beschichtungsmitteln nach den Ansprüchen 1 bis 6 zur Herstellung einer kratzfesten, witterungsbeständigen und schmutzabweisenden Beschichtung auf Kunststoff-Formkörpern, wobei diese als Verlaufmittel Fluoralkylgruppen-haltige (Meth)acrylmonomere der Formel II in Mengen von 5 bis 15 Gew.-%, bezogen auf alle polymerisierbaren Verbindungen im Beschichtungsmittel, enthalten.

10. Verwendung von Beschichtungsmitteln nach den Ansprüchen 1 bis 9, wobei diese UV-Schutzmittel, enthalten.

11. Verwendung von Beschichtungsmitteln nach den Ansprüchen 1 bis 9, wobei diese einpolymerisierbare UV-Schutzmittel enthalten.

12. Verfahren zur Beschichtung von Formkörpern mit Beschichtungsmitteln nach einem der Ansprüche 1 bis 11, dadurch gekennzeichnet, daß die Formkörper Kunststoffe sind.

13. Verfahren nach Anspruch 12, dadurch gekennzeichnet, daß der Formkörper aus Polymethylmethacrylat oder einem zu wenigstens 60 Gew.-% aus Methylmethacrylat aufgebauten Mischpolymerisat oder aus einem Polycarbonat besteht.

14. Verfahren nach den Ansprüchen 12 und 13, dadurch gekennzeichnet, daß ein durch Extrusion erzeugter Formkörper beschichtet wird.

15. Verfahren nach den Ansprüchen 12 und 13, dadurch gekennzeichnet, daß Spritzgußteile beschichtet werden.

16. Formkörper aus thermoplastischem oder thermoelastischem Kunststoff mit einer kratzfesten, witterungsbeständigen, antisoiling- und antigraffity-Eigenschaften aufweisenden Beschichtung, hergestellt mit einem Beschichtungsmittel gemäß den Ansprüchen 1 bis 11 und gemäß den Ansprüchen 13 bis 15.

## Claims

1. Use of coating agents consisting of radically polymerisable, cross-linking monomers and/or oligomers having at least two polymerisable carbon double bonds in admixture with other monomers containing a polymerisable double bond and conventional additives and surfactant fluoroalkyl group-containing (meth)acrylic monomers of the formula 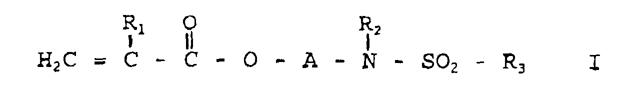 where R₁ = H, CH₃; A = C₂ -C₆-alkylene; R₂ = H, C₁ -C₄-alkyl; R₃ = cₐH_{b}F_{c}, with a = 2 to 20, b = 0 to 4, c = 2a + 1-b
in amounts of from 0.1 to 20 wt.%, based on the total weight of the polymerisable components present in the coating agent, for preparing a scratch-resistant, weatherproof and dirt-repellent coating on a moulding made of plastics.

2. Use of coating agents according to claim 1, wherein these agents contain at least 30 wt.% of a monomer or oligomer with at least three carbon double bonds and 0.1 to 10 wt.% of a fluoroalkyl group-containing (meth)acrylic monomer of formula I, based on the monomers and/or oligomers which are to be polymerised.

3. Use of coating agents according to claims 1 and 2, in which monomers with acrylate units are used as the monomer with at least two carbon double bonds in amounts of at least 70 wt.%.

4. Use of coating agents according to claims 1 to 3, wherein these agents comprise, as the (meth)acrylic monomers containing fluoroalkyl groups, combinations of monomers of the formulae 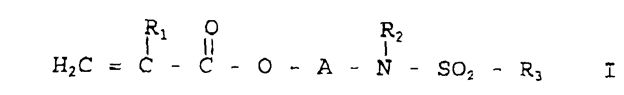 and 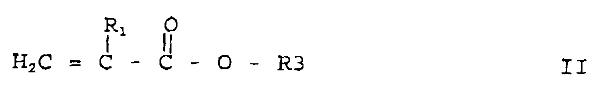 wherein R₁ = H, CH₃; A = C₂ - to C₆-alkylene; R₂ =C₁-C₄-alkyl; R₃ = CₐH_{b}F_{c}, with a = 2 to 20, b = 0 to 4, c = 2a + 1-b.

5. Use of coating agents according to claims 1 to 4, for producing a scratch-resistant, weatherproof coating on plastic mouldings, having antisoiling and antigraffiti properties, these agents comprising (meth)acrylic monomers containing fluoroalkyl groups of formula I in amounts of from 0.1 to 20 wt.%, based on all the polymerisable compounds in the coating agent.

6. Use of coating agents according to claims 1 to 4, for producing a scratch-resistant, weatherproof coating on plastic mouldings, having antisoiling and antigraffiti properties, these agents comprising (meth)acrylic monomers containing fluoroalkyl groups of formula I in amounts of from 0.5 to 5 wt.%, based on all the polymerisable compounds in the coating agent.

7. Use of coating agents according to claims 1 to 6, for producing a scratch-resistant, weatherproof and dirt-repellent coating on plastics mouldings, these agents comprising as flow agents (meth)acrylic monomers containing fluoroalkyl groups of formula II in amounts of from 0.1 to 40 wt.%, based on all the polymerisable compounds in the coating agent.

8. Use of coating agents according to claims 1 to 6, for producing a scratch-resistant, weatherproof and dirt-repellent coating on plastics mouldings, these agents comprising as flow agents (meth)acrylic monomers containing fluoroalkyl groups of formula II in amounts of from 0.5 to 20 wt.%, based on all the polymerisable compounds in the coating agent.

9. Use of coating agents according to claims 1 to 6, for producing a scratch-resistant, weatherproof and dirt-repellent coating on plastics mouldings, these agents comprising as flow agents (meth)acrylic monomers containing fluoroalkyl groups of formula II in amounts of from 5 to 15 wt.%, based on all the polymerisable compounds in the coating agent.

10. Use of coating agents according to claims 1 to 9 which contain UV protectors.

11. Use of coating agents according to claims 1 to 9 which contain UV protectors capable of being polymerised into them.

12. Process for coating mouldings with coating agents according to one of claims 1 to 11, characterised in that the mouldings are plastics.

13. Process according to claim 12, characterised in that the moulding consists of polymethyl methacrylate or a copolymer made up of at least 60 wt.% of methyl methacrylate, or a polycarbonate.

14. Process according to claims 12 and 13, characterised in that a moulding produced by extrusion is coated.

15. Process according to claims 12 and 13, characterised in that injection-moulded parts are coated.

16. Moulding of thermoplastic or thermoelastic plastics having a scratch-resistant, weatherproof coating with antisoiling and antigraffiti properties, produced with a coating agent according to claims 1 to 11 and according to claims 13 to 15.

## Revendications

1. Utilisation d'agents d'enduction constitués de monomères et/ou oligomères réticulants, polymérisables par voie radicalaire, avec au moins deux doubles liaisons carbone-carbone polymérisables dans le mélange avec d'autres monomères contenant une double liaison polymérisable et des additifs habituels ainsi que des monomères (méth)acryliques contenant des groupes fluoroalkyles tensioactifs de formule 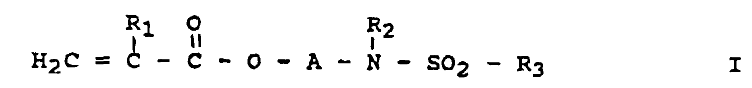 dans laquelle R₁ = H, CH₃ ; A = alkylène en C₂ à C₆ ; R₂ = H, alkyle en C₁ à C₄ ; R₃ = CₐH_{b}F_{c}, avec a = 2 à 20, b = 0 à 4, c = 2a + 1-b ;
à des quantités de 0,1 à 20 % en poids, par rapport au poids total des composants polymérisables se trouvant dans l'agent d'enduction, pour la production d'une enduction résistant à l'abrasion et aux agents atmosphériques et écartant les salissures sur une article moulé en matière plastique.

2. Utilisation d'agents d'enduction selon la revendication 1, dans laquelle ceux-ci contiennent, par rapport aux monomères et/ou oligomères à polymériser, au moins 30 % en poids d'un monomère ou selon les cas d'un oligomère comportant au moins 3 doubles liaisons carbon-carbone et 0,1 à 10 % en poids d'un monomère (méth)acrylique de formule I contenant des groupes fluoroalkyles.

3. Utilisation d'agents d'enduction selon les revendications 1 et 2, dans laquelle on utilise comme monomères ayant au moins deux doubles liaisons carbone-carbone des monomères comportant à au moins 70 % en poids des unités acrylates.

4. Utilisation d'agents d'enduction selon les revendications 1 à 3, dans laquelle ceux-ci contiennent comme monomères (méth)acryliques contenant des groupes fluoroalkyles des combinaisons de monomères de formules 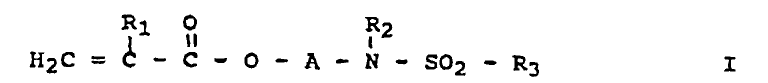 et 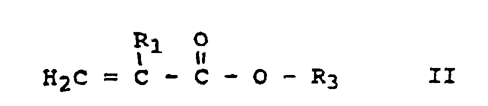 dans lesquelles R₁ = H, CH₃ ; A = alkylène en C₂ à C₆ ; R₂ = radical alkyle en C₁ à C₄ ; R₃ = CₐH_{b}F_{c} avec a = 2 à 20, b = 0 à 4, c = 2a + 1-b ;

5. Utilisation d'agents d'enduction selon les revendications 1 à 4, pour la fabrication d'un enduit résistant à l'abrasion et aux agents atmosphériques sur des articles moulés en matière plastique avec des propriétés anti-salissures et anti-graffitis, ces enduits contenant des monomères (méth)acryliques contenant des groupes fluoroalkyles de formule I à des quantités de 0,1 à 20 % en poids par rapport à tous les composés polymérisables dans l'agent d'enduction.

6. Utilisation d'agents d'enduction selon les revendications 1 à 4 pour la fabrication d'une enduction résistant à l'abrasion et aux agents atmosphériques sur des articles moulés en matière plastique avec des propriétés anti-salissures et anti-graffiti, ces enductions contenant des monomères (méth)acryliques contenant les groupes fluroalkyles de formule I à des quantités de 0,5 à 5 % en poids par rapport à tous les composés polymérisables dans l'agent d'enduction.

7. Utilisation d'agents d'enduction selon les revendications 1 à 6 pour la fabrication d'une enduction résistant à l'abrasion et aux agents atmosphériques et écartant les salissures sur des articles moulés en matière plastique, ces enductions contenant comme agent d'écoulement des monomères (méth)acryliques avec des groupes fluroalkyles de formule II à des quantités de 0,1 à 40 % en poids, par rapport à tous les composés polymérisables dans l'agent d'enduction.

8. Utilisation d'agents d'enduction selon les revendications 1 à 6 pour la fabrication d'une enduction ou enduit résistant à l'abrasion et aux agents atmosphériques et écartant les salissures sur des articles moulés en matière plastique, ces enductions contenant comme agent d'écoulement des monomères (méth)acryliques avec des groupes fluoroalkyles de formule II à des quantités de 0,5 à 20 % en poids par rapport à tous les composés polymérisables dans l'agent d'enduction.

9. Utilisation d'agents d'enduction selon les revendications 1 à 6 pour la fabrication d'une enduction résistant à l'abrasion et aux agents atmosphériques et écartant 1 salissures sur des articles moulés en matière synthétique, cette enduction contenant comme agent d'écoulement des monomères (méth)acryliques avec des groupes fluoroalkyles de formule II à des quantités de 5 à 15 % en poids par rapport à tous les composés polymérisables dans l'agent d'enduction.

10. Utilisation d'agents d'enduction selon les revendications 1 à 9, ces agents contenant des agents de protection contre les U.V..

11. Utilisation d'agents d'enduction selon les revendications 1 à 9, ces agents contenant des agents de protection contre les U.V. pouvant s'intégrer dans la polymérisation.

12. Procédé d'enduction d'articles moulés avec des agents d'enduction selon l'une des revendications 1 à 11, caractérisé en ce que les articles moulés sont des matières plastiques.

13. Procédé selon la revendication 12,
caractérisé en ce que
l'article moulé se compose de polyméthacrylate de méthyle ou d'un polymère mixte constitué à au moins 60 % en poids de méthacrylate de méthyle ou d'un polycarbonate.

14. Procédé selon les revendications 12 et 13,
caractérisé en ce qu'
on recouvre un article moulé produit par extrusion.

15. Procédé selon les revendications 12 et 13,
caractérisé en ce qu'
on recouvre des pièces produites par un moulage par injection.

16. Articles moulés en matière plastique thermoplastique et thermoélastique avec une enduction résistant à l'abrasion et aux agents atmosphériques, présentant des propriétés anti-salissures et anti-graffitis, fabriqués avec un agent d'enduction selon les revendications 1 à 11 et selon les revendications 13 à 15.
